# EUROPÄISCHE PATENTSCHRIFT

(11) **EP 0 411 185 B1**
(45) Veröffentlichungstag und Bekanntmachung des Hinweises auf die Patenterteilung: **08.06.1994**
(21) Anmeldenummer: 89114325.7
(22) Anmeldetag: 03.08.1989
(51) Int. Cl.: G07F 7/10, G06F 1/00

(54) **Vorrichtung zur Eingabe von Daten**
Data input device
Dispositif pour introduction de données

(43) Veröffentlichungstag der Anmeldung: 06.02.1991
(73) Patentinhaber: SCHEIDT & BACHMANN GMBH, D-41238 Mönchengladbach (DE)
(72) Erfinder: Miller, Gert, Dipl.-Ing., D-4050 Mönchengladbach 1 (DE); Busch, Erwin, Dipl.-Ing., D-4050 Mönchengladbach 1 (DE); Baumann, Gerd, Ing.grad., D-5177 Titz (DE); Wortelkamp, Ulrich, Dipl.-Ing., D-4050 Mönchengladbach 2 (DE); Sauermann, Michael, Ing.grad., D-4050 Mönchengladbach (DE)
(74) Vertreter: Stenger, Watzke & Ring Patentanwälte

(56) Entgegenhaltungen:
- EP-A- 0 272 230
- EP-A- 0 295 985
- WO-A-86/03861
- DE-A- 3 231 037
- FR-A- 2 596 176

## Beschreibung

Die Erfindung betrifft eine Vorrichtung zur Eingabe von Daten für Warenverkaufs- und/oder Dienstleistungseinrichtungen, wie beispielsweise Tankautomaten, Geldausgabeautomaten, Automaten zur Überprüfung einer Zugangsberechtigung und Kasseneinrichtungen zur Abwicklung des bargeldlosen Zahlungsverkehrs, mit einer Tastatur und einer mit der Tastatur elektrisch verbundenen, ihr räumlich benachbart angeordneten Leiterplatte, die außer einem Rechner zur Weiterverarbeitung und Verschlüsselung der über die Tastatur eingegebenen, benutzerspezifischen Daten, beispielsweise PIN-Code, einen durch eine Energiequelle, z.B. einen Kondensator gepufferten Schreib-Lese-Speicher (RAM) enthält, in dem mindestens eine vorrichtungsspezifische Code-Nummer abgespeichert ist, deren Vorhandensein und Übereinstimmung mit der entsprechenden Code-Nummer des Rechners vor jeder Verarbeitung der eingegebenen Daten durch den Rechner überprüft wird.

Vorrichtungen der eingangs beschriebenen Art sind bei einer Vielzahl von Einrichtungen bekannt. Durch die Verschlüsselung der mittels der Tastatur eingegebenen Daten mittels des Rechners wird verhindert, daß die Daten auf unerlaubte Weise bekannt oder manipuliert werden können. Hierzu gehören auch die benutzerspezifischen Daten, die beispielsweise in Form eines PIN-Codes mittels der Tastatur eingegeben werden müssen, bevor die Einrichtung, beispielsweise mit Hilfe einer Magnetkarte oder eines sonstigen Berechtigungsausweises, in Betrieb gesetzt werden kann. Eine in einem Schreib-Lese-Speicher (RAM) abgespeicherte vorrichtungsspezifische Code-Nummer stellt sicher, daß die ebenfalls mit einer Code-Nummer versehene Einrichtung nur dann betriebsbereit ist, wenn die beiden Code-Nummern übereinstimmen.

Die Druckschrift FR-A-2,596,176 offenbart ein Dateneingabegerät, bestehend aus einem zweiteiligen Gehäuse. In das Gehäuse ist eine Hybridschaltung eingebracht. Das Gehäuse wird dann mit einer die Tastatur tragenden Abdeckung abgeschlossen. Um den Zugang zu der unter der Tastatur angeordneten Schaltung durch Abheben der Abdeckung zu verhindern, wird offenbart, zwischen der Schaltung und der die Tastatur tragenden Abdeckung Mikroschalter anzuordnen. Beim Trennen der beiden Gehäuseteile werden die Mikroschalter geschaltet und der in der Hybridschaltung enthaltene Speicher gelöscht.

Um den Zugang zu der Hybridschaltung von den anderen Gehäuseseiten zu verhindern, wird vorgeschlagen, in dem Gehäuse einen Leiter zu verlegen. Sowohl die Mikroschalter als auch der im Gehäuse verlegte Leiter gehören zu der Stromversorgungsleitung des Speichers. Wird ein Mikroschalter durch Abheben des oberen Gehäuseteils oder der Leiter durch Anbohren des Gehäuses durchtrennt, wird der Speicher durch Unterbrechung der Stromversorgung gelöscht.

Um eine unbefugte Benutzung der Warenverkaufs- und/oder Dienstleistungseinrichtungen der voranstehend beschriebenen Art auszuschließen, ist es erforderlich, Manipulationen insbesondere bei der Erfassung und Verschlüsselung der eingegebenen Daten zu verhindern. Der Erfindung liegt deshalb die Aufgabe zugrunde, eine Vorrichtung der eingangs beschriebenen Art derart weiterzubilden, daß Manipulationen an der Leiterplatte ausgeschlossen sind.

Die Lösung dieser Aufgabenstellung durch die Erfindung ist dadurch gekennzeichnet, daß die den Rechner und den Schreib-Lese-Speicher enthaltende Leiterplatte allseitig durch eine Abdeckung gegen Zugriff geschützt ist, deren Lageveränderung, Entfernen oder Beschädigung zu einer Löschung der Code-Nummer im Schreib-Lese-Speicher führt. Um auch ein Aufbrechen oder Aufbohren der in der vorgeschriebenen Lage verbleibenden Abdeckung feststellen zu können, kann diese aus mindestens zwei elektrisch leitenden, gegeneinander isolierten Lagen gebildet sein. Bei einem Aufbrechen oder Aufbohren führt ein Kurzschluß dieser beiden Lagen der Abdeckung zu einem Löschen der Code-Nummer.

Sollten irgendwelche Manipulationen an der Abdeckung vorgenommen werden, führt dies automatisch zu einer Löschung der vorrichtungsspezifischen Code-Nummer im Schreib-Lese-Speicher. Diese Code-Nummer ist redundant im zugehörigen Rechner gespeichert und wird vor Beginn jedes Datenverarbeitungsvorganges verglichen. Sofern die beiden Code-Nummern nicht übereinstimmen, erfolgt keine Inbetriebnahme der Einrichtung. Die erfindungsgemäße Löschung der Code-Nummer im Schreib-Lese-Speicher blockiert demzufolge automatisch eine Inbetriebnahme der zugehörigen Einrichtung. Insgesamt wird somit sichergestellt, daß Manipulationen an der Leiterplatte zu einer automatischen Außerbetriebsetzung der Einrichtung führen. Der Schutz der Leiterplatte ist deshalb wichtig, weil sie das Programm für die Verschlüsselungs-Algorithmen der eingegebenen und weiterzuverarbeitenden Daten beinhaltet. Sollte man in den Besitz dieser Verschlüsselungs-Algorithmen gelangen, wäre man in der Lage, die nachgeschaltete Einrichtung beliebig oft zum Nachteil des Betreibers und einer beliebigen Anzahl der berechtigten Benutzer zu benutzen.

Gemäß einem weiteren Merkmal der Erfindung wird die Lage der Abdeckung durch Abstandssensoren, beispielsweise Mikroschalter überwacht. Eine alternative oder zusätzliche Überwachung kann auch durch opto-elektronische Elemente, beispielsweise Fotodioden erfolgen. Auf diese Weise wird sichergestellt, daß ein Entfernen oder Anheben der Abdeckung zum Zwecke der Manipulation entweder durch die Abstandssensoren und/oder durch die opto-elektronischen Elemente aufgrund des Lichteinfalls festgestellt wird und automatisch zur Löschung der vorrichtungsspezifischen Code-Nummer führt.

Eine bevorzugte Ausführungsform der Erfindung besteht darin, daß die Abdeckung aus einer mehrlagigen, flexiblen Leiterplatte gebildet ist. Auf diese Weise wird mit geringem Aufwand eine kostengünstige Abdeckung geschaffen. Diese Abdeckung kann die bestückte Leiterplatte zwischen sich in einer Art Sicherheitsraum einschließen. Andererseits ist es aber auch möglich, die eigentliche Leiterplatte frontseitig mittels der Tastatur gegen Zugriff zu schützen.

Zu diesem Zweck ist gemäß einem weiteren Merkmal der Erfindung die Leiterplatte hinter der Tastatur angeordnet, die durch Piezo-Elemente gebildet ist, welche frontseitig durch eine nicht ohne sichtbare Beschädigung entfernbare Folie abgedeckt sind.

Durch die Verwendung von Piezo-Elementen für die einzelnen Tasten der Tastatur und durch die frontseitige Abdeckung dieser Piezo-Elemente durch eine Folie, die nicht ohne sichtbare Beschädigung entfernt werden kann, wird erfindungsgemäß sichergestellt, daß von der Frontseite her keine Manipulationen an der Tastatur vorgenommen werden können, ohne daß dies jedem Benutzer auffällt. Hierbei wird davon ausgegangen, daß kein Berechtigter die Tastatur benutzen wird, wenn diese erkennbar beschädigt ist. Die den Rechner und den Schreib-Lese-Speicher enthaltende Leiterplatte, die unmittelbar hinter der Tastatur angeordnet ist, wird somit auch frontseitig durch eine durch die Tastatur gebildete Abdeckung gegen Zugriff geschützt.

Gemäß einem weiteren Merkmal der Erfindung erfolgt das Löschen der Code-Nummer im Schreib-Lese-Speicher durch Ausschalten der den Schreib-Lese-Speicher puffernden Energiequelle, z.B. Kurzschließen des Kondensators. Es bedarf demzufolge bei Auftreten der voranstehend beschriebenen Manipulationen an der Abdeckung keiner aufwendigen Bauteile oder Schaltung.

Mit der Erfindung wird schließlich vorgeschlagen, die Piezo-Elemente der Tastatur auf einer Abstützplatte anzuordnen, die frontseitig durch die Folie abgedeckt ist, welche nicht ohne sichtbare Beschädigung entfernt werden kann.

Auf der Zeichnung ist ein Ausführungsbeispiel der erfindungsgemäßen Vorrichtung schematisch dargestellt, und zwar zeigen:

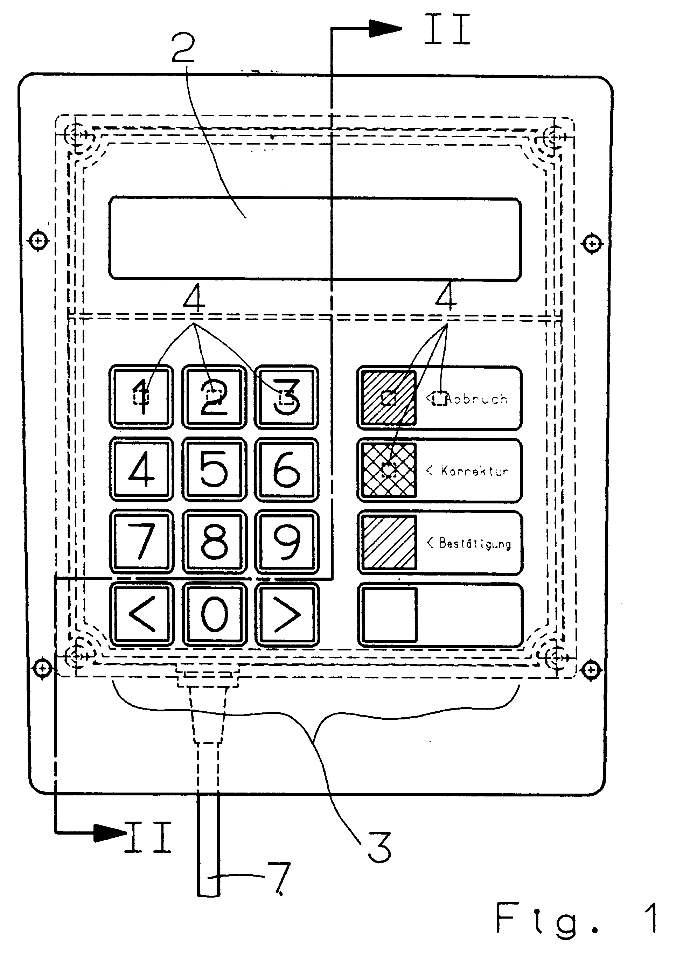

- Fig. 1: eine Ansicht eines Bedienfeldes einer im übrigen nicht dargestellten Einrichtung und
- Fig. 2: einen Längsschnitt gemäß der Schnittlinie 11 - 11 in Fig. 1.

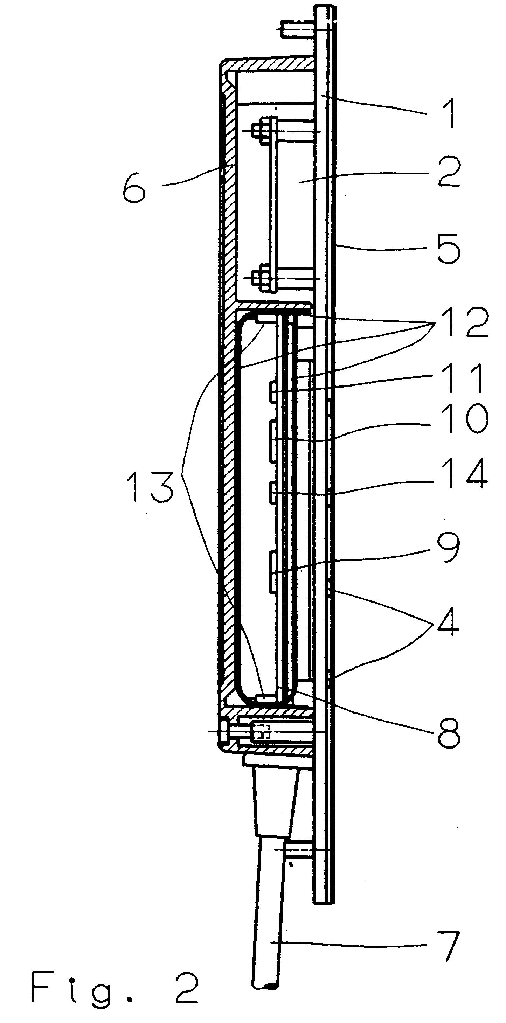

Das mit einer Abstützplatte 1, vorzugsweise aus Aluminium versehene Bedienfeld einer im übrigen nicht dargestellten Einrichtung umfaßt im oberen Teil eine Anzeigevorrichtung 2 und im unteren Teil eine Tastatur 3, die beim Ausführungsbeispiel insgesamt sechzehn Tasten umfaßt. Jede Taste wird durch ein Piezo-Element 4 gebildet, das auf der Frontseite der Abstützplatte 1 angeordnet ist. Die zum Benutzer zeigende Frontseite der Abstützplatte 1 und damit sämtliche Piezo-Elemente 4 sind durch eine Folie 5 abgedeckt, die nicht ohne sichtbare Beschädigung entfernt werden kann. Diese Situation ist am besten in Fig.2 zu erkennen.

Rückseitig ist die Abstützplatte 1 mit einem Gehäusedeckel 6 versehen, aus dem an der Unterseite ein Kabel 7 herausgeführt ist. Die mit Hilfe dieses Kabels 7 übertragenen Daten sind zuvor innerhalb des Gehäusedeckels 6 verschlüsselt worden.

Zu diesem Zweck befindet sich innerhalb des Gehäusedeckels 6 eine Leiterplatte 8, die unter anderem einen Rechner 9 und einen Schreib-Lese-Speicher (RAM) 10 enthält. Weiterhin ist die Leiterplatte 8 mit sämtlichen Piezo-Elementen 4 der Tastatur 3 verbunden. Mit Hilfe des Rechners 9 werden die über die Tastatur eingegebenen Daten, insbesondere auch die benutzerspezifischen Daten, wie beispielsweise der PIN-Code jedes Benutzers, vor ihrer Weitergabe über das Kabel 7 verschlüsselt. Im Schreib-Lese-Speicher 10 ist eine vorrichtungsspezifische Code-Nummer abgespeichert. Diese wird vor jeder Inbenutzungnahme des nachgeschalteten Automaten durch den Rechner mit der Code-Nummer des zugehörigen Automaten verglichen. Eine Inbetriebnahme ist nur dann möglich, wenn beide vorrichtungsspezifischen Code-Nummern übereinstimmen. Der Schreib-Lese-Speicher 10 ist durch einen Kondensator 11 gepuffert.

Beim Ausführungsbeispiel ist die Leiterplatte 8 allseitig durch eine Abdeckung 12 gegen Zugriff geschützt, die aus zwei elektrisch leitenden, gegeneinander isolierten Lagen, beispielsweise aus Kupferfolie, gebildet ist und die einen Zugang zur Leiterplatte 8 verhindert, solange sich die Abdeckung 12 in der vorgeschriebenen Lage befindet. Um diese Lage zu überwachen, sind beim Ausführungsbeispiel Abstandssensoren, beispielsweise Mikroschalter 13 und opto-elektronische Elemente, beispielsweise Fotodioden 14 angeordnet. Wird die Abdeckung 12 angehoben oder gar entfernt, werden die Mikroschalter 13 betätigt. Außerdem sorgt in das Innere der Abdeckung 12 einfallendes Licht für ein Ansprechen der Fotodioden 14.

Diese Vorgänge führen automatisch zu einem Löschen der im Schreib-Lese-Speicher 10 abgespeicherten, vorrichtungsspezifischen Code-Nummer, vorzugsweise durch Kurzschließen des den Schreib-Lese-Speicher puffernden Kondensators 11. Eine derartige Löschung der Code-Nummer des Schreib-Lese-Speichers 10 erfolgt auch dann, wenn die Abdeckung 12 beschädigt, beispielsweise aufgebohrt wird. In diesem Fall tritt ein Kurzschluß zwischen den beiden gegeneinander isolierten Lagen der Abdeckung 12 ein, der ebenfalls zu einem Kurzschließen des Kondensators 11 führt.

Von vorn ausgeführte Manipulationen an der Tastatur 3 sind durch Beschädigen der Folie 5 für jeden Benutzer erkennbar. Da rückseitige Manipulationen dadurch eine Inbetriebnahme des nachgeschalteten Automaten verhindern, daß die vor jeder Inbetriebnahme überprüfte vorrichtungsspezifische Code-Nummer gelöscht wird, kann auf einen frontseitigen Schutz der Leiterplatte 8 verzichtet werden, wenn die Leiterplatte 8 hinter der Tastatur 3 angeordnet wird und eine Folie 5 zur frontseitigen Abdeckung der Tastatur 3 verwendet wird, die nicht ohne sichtbare Beschädigung entfernt werden kann.

Auch diese Art der Abdeckung 12 stellt sicher, daß Manipulationen an der Tastatur erkannt werden und eine Inbetriebnahme der zugehörigen Einrichtung ausgeschlossen ist, sobald die die Tastatur 3 rückwärtig abschließende Abdeckung 12 verrückt, entfernt oder beschädigt wird.

## Patentansprüche

1. Vorrichtung zur Eingabe von Daten für Warenverkaufs- und/oder Dienstleistungseinrichtungen, wie beispielsweise Tankautomaten, Geldausgabeautomaten, Automaten zur Überprüfung einer Zugangsberechtigung und Kasseneinrichtungen zur Abwicklung des bargeldlosen Zahlungsverkehrs, mit einer Tastatur (3) und einer mit der Tastatur (3) elektrisch verbundenen, ihr räumlich benachbart angeordneten Leiterplatte (8), die außer einem Rechner (9) zur Weiterverarbeitung und Verschlüsselung der über die Tastatur (3) eingegebenen, benutzerspezifischen Daten, beispielsweise PIN-Code, einen durch eine Energiequelle, z.B. Kondensator (11) gepufferten Schreib-Lese-Speicher (RAM) (10) enthält, in dem mindestens eine vorrichtungsspezifische Code-Nummer abgespeichert ist, deren Vorhandensein und Übereinstimmung mit der entsprechenden Code-Nummer des Rechners (9) vor jeder Verarbeitung der eingegebenen Daten durch den Rechner (9) überprüft wird,
**dadurch gekennzeichnet,**
daß die den Rechner (9) und den Schreib-Lese-Speicher (10) enthaltende Leiterplatte (8) allseitig durch eine Abdeckung (12) gegen Zugriff geschützt ist, deren Lageveränderung, Entfernen oder Beschädigung zu einer Löschung der Code-Nummer im Schreib-Lese-Speicher (10) führt, und daß die Abdeckung (12) aus mindestens zwei elektrisch leitenden, gegeneinander isolierten Lagen gebildet ist.

2. Vorrichtung nach Anspruch 1, dadurch gekennzeichnet, daß die Lage der Abdeckung (12) durch Abstandssensoren, beispielsweise Mikroschalter (13) überwacht ist.

3. Vorrichtung nach Anspruch 1 oder 2, dadurch gekennzeichnet, daß die Lage der Abdeckung (12) durch opto-elektronische Elemente, beispielsweise Fotodioden (14) überwacht ist.

4. Vorrichtung nach mindestens einem der Ansprüche 1 bis 3, dadurch gekennzeichnet, daß die Abdeckung (12) aus einer mehrlagigen, flexiblen Leiterplatte (8) gebildet ist.

5. Vorrichtung nach mindestens einem der Ansprüche 1 bis 4, dadurch gekennzeichnet, daß die Leiterplatte (8) hinter der Tastatur (3) angeordnet ist, die durch Piezo-Elemente (4) gebildet ist, welche frontseitig durch eine nicht ohne sichtbare Beschädigung entfernbare Folie (5) abgedeckt sind.

6. Vorrichtung nach mindestens einem der Ansprüche 1 bis 5, dadurch gekennzeichnet, daß das Löschen der Code-Nummer im Schreib-Lese-Speicher (10) durch Ausschalten der den Schreib-Lese-Speicher (10) puffernden Energiequelle, z.B. Kurzschließen des Kondensators (11) erfolgt.

7. Vorrichtung nach mindestens einem der Ansprüche 1 bis 6, dadurch gekennzeichnet, daß die Piezo-Elemente (4) auf einer Abstützplatte (1) angeordnet sind, die frontseitig durch die Folie (5) abgedeckt ist.

## Claims

1. Data input device for vending and/or service equipment, such as automatic petrol pumps, automatic teller machines, automatic units for verifying access authorization and point-of-sales equipment for handling cashless payment transactions for example, having a keyboard (3) and a circuit board (8) which is electrically connected to the keyboard (3), is arranged spatially adjacent to it and which contains, in addition to a processor (9) for further processing and encrypting the user-specific data, for example PIN code, input via the keyboard (3), a read-write memory (RAM) (10) buffered by an energy source, for example capacitor (11), in which memory at least one device-specific code number is stored, the presence of which and agreement with the corresponding code number of the processor (9) is verified before every processing of the input data by the processor (9), characterized in that the circuit board (8) containing the processor (9) and the read-write memory (10) is protected against access on all sides by a cover (12), whose change of position, removal or damage leads to the code number being erased in the read-write memory (10), and in that the cover (12) is formed by at least two mutually insulated electroconductive layers.

2. Device according to Claim 1, characterized in that the position of the cover (12) is monitored by range sensors, for example microswitches (13).

3. Device according to Claim 1 or 2, characterized in that the position of the cover (12) is monitored by optoelectronic elements, for example photodiodes (14).

4. Device according to at least one of Claims 1 to 3, characterized in that the cover (12) is formed by a multi-layer, flexible circuit board (8).

5. Device according to at least one of Claims 1 to 4, characterized in that the circuit board (8) is arranged behind the keyboard (3), which is formed by piezo elements (4) covered on the front side by a film (5) that cannot be removed without visible damage.

6. Device according to at least one of Claims 1 to 5, characterized in that the code number is erased in the read-write memory (10) by switching off the energy source buffering the read-write memory (10), for example shortcircuiting the capacitor (11).

7. Device according to at least one of Claims 1 to 6, characterized in that the piezo elements (4) are arranged on a support plate (1) which is covered on the front side by the film (5).

## Revendications

1. Dispositif d'introduction de données destiné à des installations de vente de marchandises et/ou de prestation de services, comme par exemple des pompes à essence automatiques, des distributeurs automatiques de billets, des automates de contrôle d'une habilitation d'accès et des systèmes d'encaissement destinés à effectuer des opérations de paiement sans argent liquide, ledit dispositif comprenant un clavier (3) et une carte imprimée (8) qui est connectée électriquement au clavier (3) et disposée à son voisinage dans l'espace et qui, outre un calculateur (9) destiné au traitement ultérieur et au codage des données spécifiques à l'utilisateur entrées par le clavier (3), par exemple du code d'identification personnel, comporte une mémoire de lecture-écriture (RAM) (10) qui est alimentée par une source d'énergie, par exemple par un condensateur (11), et dans laquelle est mémorisé au moins un numéro de code spécifique au dispositif, dont la présence et la concordance avec le numéro de code correspondant du calculateur (9) sont contrôlées par le calculateur (9) avant chaque traitement des données entrées, caractérisé en ce que la carte imprimée (8) contenant le calculateur (9) et la mémoire de lecture-écriture (10) est protégée de toutes parts contre les intrusions par un couvercle (12) dont le déplacement, l'enlèvement ou la détérioration entraînent un effacement du numéro de code de la mémoire de lecture-écriture (10), et en ce que le couvercle (12) est formé d'au moins deux couches électroconductrices isolées l'une par rapport à l'autre.

2. Dispositif selon la revendication 1, caractérisé en ce que la position du couvercle (12) est surveillée au moyen de capteurs d'écartement, par exemple de microrupteurs (13).

3. Dispositif selon la revendication 1 ou 2, caractérisé en ce que la position du couvercle (12) est surveillée par des éléments opto-électroniques, par exemple par des photodiodes (14).

4. Dispositif selon au moins l'une des revendications 1 à 3, caractérisé en ce que le couvercle (12) est formé par une carte imprimée souple (8) à plusieurs couches.

5. Dispositif selon au moins l'une des revendications 1 à 4, caractérisé en ce que la carte imprimée (8) est disposée derrière le clavier (3) qui est formé par des piézo-éléments (4) dont la face avant est recouverte par une pellicule (5) qui ne peut pas être enlevée sans détérioration visible.

6. Dispositif selon au moins l'une des revendications 1 à 5, caractérisé en ce que l'effacement du numéro de code de la mémoire de lecture-écriture (10) s'effectue en mettant hors circuit la source d'énergie qui alimente la mémoire de lecture-écriture (10), par exemple en courtcircuitant le condensateur (11).

7. Dispositif selon au moins une des revendications 1 à 6, caractérisé en ce que les piézo-éléments (4) sont disposés sur une plaque d'appui (1) dont la face avant est recouverte par la pellicule (5).
